(19) **Europäisches Patentamt**
**European Patent Office**
**Office européen des brevets**

(11) **EP 4 525 317 A2**

(12) **EUROPEAN PATENT APPLICATION**

(43) Date of publication:
**19.03.2025 Bulletin 2025/12**

(21) Application number: **24201056.9**

(22) Date of filing: **18.09.2024**

(51) International Patent Classification (IPC):
**H04B 5/40** (2024.01)    **H04B 5/77** (2024.01)
**G06K 7/10** (2006.01)

(52) Cooperative Patent Classification (CPC):
**G06K 7/10128; H04B 5/40; H04B 5/77**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023 GB 202314217**

(71) Applicant: **Nokia Technologies Oy
02610 Espoo (FI)**

(72) Inventors:
- **SVENDSEN, Simon**
  **Aalborg (DK)**
- **HARREBEK, Johannes**
  **Aalborg (DK)**
- **VEJLGAARD, Benny**
  **Aalborg (DK)**
- **KIMIONIS, Ioannis**
  **Murray Hill, New Jersey (US)**

(74) Representative: **Nokia EPO representatives
Nokia Technologies Oy
Karakaari 7
02610 Espoo (FI)**

(54) **TERMINAL DEVICE AND COMMUNICATION SYSTEM**

(57)    Embodiments of the present disclosure relate to a terminal device (200) and a communication system (900) comprising at least one terminal device (902). The terminal device (200) comprises first circuitry (214) coupled to an antenna (202) and configured for a binary phase shift keying (BPSK) modulation based on a dual frequency signal received via the antenna. A first frequency part (204) of the dual frequency signal matches the antenna resonance frequency and is used for charging an energy storage, and a second frequency part (206) of the dual frequency signal is used for performing the BPSK modulation at a mismatched frequency of an antenna impedance. The terminal device (200) also comprises second circuitry (212) coupled to the first circuitry and configured to control a state of the first circuitry for performing the BPSK modulation. The terminal device can support BPSK backscatter with low complexity, cost, and a small size.

FIG. 2

EP 4 525 317 A2

## Description

### FIELD

Various example embodiments generally relate to the field of communications and in particular, to a terminal device and a communication system comprising at least one terminal device.

### BACKGROUND

The number of internet of things (IoT) connections has been growing rapidly in recent years and is predicted to be hundreds of billions. With more and more 'things' expected to be interconnected for improving production efficiency and increasing comforts of life, it demands further reduction of size, cost, and power consumption for IoT devices. In particular, regular replacement of battery for all the IoT devices is impractical due to the tremendous consumption of materials and manpower. It has become a trend to use energy harvested from environments to power IoT devices for self-sustainable communications, especially in applications with a huge number of devices (e.g., ID tags and sensors).

Regarding IoT applications, the third generation partnership project (3GPP) has specified narrowband (NB)-IoT/enhanced machine-type communication (eMTC) and new radio (NR) RedCap before release-18 to satisfy the requirements on low cost and low power devices for wide area IoT communication. These IoT devices usually consume tens or hundreds of milliwatts power during transmitting or receiving. However, to achieve the internet of everything, IoT devices with ten or even a hundred times lower cost and power consumption are needed, especially for a large number of applications requiring batteryless devices.

### SUMMARY

In general, example embodiments of the present disclosure provide a terminal device and a communication system comprising at least one terminal device, especially an A-IoT device with a single resonance antenna for simultaneous energy harvesting and binary phase modulation with a dual frequency activation signal. For example, the terminal device provided by the example embodiments of the present disclosure can support binary phase shift keying (BPSK) backscatter with low complexity, cost, and a small size.

In a first aspect, there is provided a terminal device. The terminal device may comprise first circuitry coupled to an antenna and configured for a BPSK modulation based on a dual frequency signal received via the antenna, wherein a first frequency part of the dual frequency signal may match the antenna resonance frequency and may be used for charging an energy storage, and a second frequency part of the dual frequency signal may be used for performing the BPSK modulation at a mismatched frequency of an antenna impedance; and second circuitry coupled to the first circuitry and configured to control a state of the first circuitry for performing the BPSK modulation.

In some example embodiments, the terminal device may further comprise third circuitry coupled to the antenna and configured for an on-off-key (OOK) modulation based on a single frequency signal received via the antenna resonance frequency, wherein the second circuitry may be coupled to the third circuitry and configured to control a state of the third circuitry for performing the OOK modulation.

In some example embodiments, the first circuitry and the third circuitry may be coupled in parallel to an antenna feed.

In some example embodiments, the third circuitry may comprise a first single pole single throw (SPST) switch connected to ground.

In some example embodiments, in the event that the single frequency signal is received via the antenna and the first SPST switch is in an on-state, the antenna impedance at the single frequency may be to be mismatched and the single frequency is reflected back.

In some example embodiments, in the event that the single frequency signal is received via the antenna and the first SPST switch is in an off-state, the antenna impedance at the single frequency may be to be matched and the single frequency signal may be to charge the energy storage.

In some example embodiments, a toggling of the first SPST switch may be to result in the OOK modulation and a periodically energy harvesting.

In some example embodiments, in the event that the dual frequency signal is received via the antenna, the first SPST switch may be configured in an off-state.

In some example embodiments, the first circuitry may comprise a first transmission line coupled to the antenna, a second SPST switch coupled to the first transmission line, and a second transmission line coupled to the second SPST switch, and wherein the second SPST switch may be coupled to the second and the third circuitry.

In some example embodiments, in the event that the first SPST switch is in the off-state, the first circuitry may act as a high impedance for the first frequency part such that the first frequency part is to charge the energy storage, and the first circuitry may act as a low impedance for the second frequency part such that the second frequency is reflected back at an open end of the first or second transmission line of the first circuit.

In some example embodiments, a phase shift of the second frequency part may vary based on an electrical length of an open stub associated with the second SPST switch in the on-state or the off-state, wherein the second SPST switch may be configured to enable the BPSK modulation.

In some example embodiments, the third circuitry may comprise a first single pole double throw (SPDT) switch.

In some example embodiments, by toggling the SPDT switch, the OOK modulation may be enabled for both the single frequency signal and the dual frequency signal.

In some example embodiments, by toggling the SPDT switch, either of the OOK modulation and the BPSK modulation may be enabled for the dual frequency signal.

In some example embodiments, the first circuitry may comprise a second SPDT switch coupled to the antenna, two transmission lines of different electrical length coupled to the second SPDT switch and to a third SPDT switch, and wherein the second SPDT switch and third SPDT switch may be coupled to the second circuitry.

In some example embodiments, the second SPDT switch and third SPDT switch may be switched in parallel to change phases for both the first frequency part and the second frequency part.

In some example embodiments, the first circuitry may comprise a single pole triple throw (SP3T) switch coupled to the antenna, two transmission lines of different electrical length coupled to the SP3T switch and to a fourth SPDT switch, and wherein the SP3T switch and the fourth SPDT switch may be coupled to the second circuitry.

In some example embodiments, in the event that a single frequency signal is received via the antenna, the SP3T switch may be configured in a shorted-state, and the single frequency signal may not match the antenna and may be reflected back.

In some example embodiments, in the event that a single frequency signal is received via the antenna, the SP3T switch may be configured in a direct-state together with fourth SPDT, and the single frequency signal may match the antenna and charges the energy storage; and wherein a toggling of the SP3T switch together with the fourth SPDT may be to result in the OOK modulation and a periodically energy harvesting.

In some example embodiments, in the event that the dual frequency signal is received via the antenna, the SP3T switch may be configured in a 180-degree reflected delay-state, and the fourth SPDT switch may be configured in parallel with the SP3T switch, and the second frequency part may be reflected back using the BPSK modulation, and wherein the second frequency part may be delayed by 180 degrees in the 180-degree reflected delay-state.

In some example embodiments, the antenna may be a single resonance antenna.

In a second aspect, there is provided a communication system. The communication system may comprise at least one terminal device of the first aspect; and at least one network device in communication with the at least one terminal device.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, in which:

FIG. 1 illustrates an example ambient IoT (A-IoT) backscatter operation for device A and B related to some example embodiments of the present disclosure;

FIG. 2 illustrates an example terminal device in accordance with some example embodiments of the present disclosure;

FIG. 3 illustrates another example terminal device in accordance with some example embodiments of the present disclosure;

FIGS. 4A-4B illustrate an example complex impedance of a single resonance A-IoT antenna resonating at a certain frequency in accordance with some example embodiments of the present disclosure;

FIGS. 5A-5B illustrate an example BPSK phase imbalance in accordance with some example embodiments of the present disclosure;

FIGS. 6-8 illustrates several example terminal devices in accordance with some example embodiments of the present disclosure; and

FIG. 9 illustrates an example communication system comprising the terminal device in accordance with some example embodiments of the present disclosure.

Throughout the drawings, the same or similar reference numerals represent the same or similar element.

## DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NRNB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial, a relay node, an integrated access and backhaul (IAB) node, and/or industrial wireless networks, and the like. In the following description, the terms "terminal device", "communication device", "terminal", "user equipment" and "UE" may be used interchangeably.

As discussed above, an issue with existing 3GPP technologies for the target use cases is the capability of cooperating with energy harvesting considering limited device size. Cellular devices usually consume tens or even hundreds of milliwatts power for transceiver processing. Taking NB-IoT module for example, the typical current consumption for receive processing is about 60mA with supply voltage higher than 3.1V, while 70mA for transmit processing at 0dBm transmit power. Furthermore, the output power provided by typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with rechargeable battery or supercapacitor. However, there are still a few problems to be solved. Firstly, both rechargeable battery and supercapacitor may suffer from shortened lifetime in practical cases. It is hard to provide constant charging current or voltage by energy harvesting, while longtime continuous charging is needed due to the very small output power from energy harvester. Inconstant charging current and longtime continuous charging are both harmful to battery life. For supercapacitor, its lifetime will be significantly reduced in high temperature environments (e.g., less than 3 years at 50 degrees centigrade).

Secondly, device size will be significantly increased. As small size button battery can only provide current of a few tens of milliamps, battery with much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module. Thirdly, both rechargeable batteries and supercapacitors can be more expensive than the module itself. Even purchased in large quantities, the cost of a suitable battery or supercapacitor may nearly doubles the cost of the device.

Regarding some non-3GPP technologies, radio frequency identification (RFID) is a technology supporting battery less tags (or devices). The power consumption of commercial passive RFID tags can be as low as one microwatt. The key techniques enabling such low power consumption are envelope detection for downlink data reception, and backscatter communication for uplink data transmission. The RFID is designed for short-range communications whose typical effective range is less than 10 meters. As the air interface of RFID almost remains unchanged since 2005, the too-simple transmission scheme becomes the obstacle of improving its link budget and capability of supporting scalable network.

Attracted by the extremely low power consumption of backscatter communication, many non-3GPP technologies begin to put efforts into related research, such as Wi-Fi, Bluetooth, UWB, and LORA. Various research show that a few or tens of microwatts power consumption can be supported for passive tags based on or with small modifications to the above air interfaces. A significant proportion of the studies are targeting at long range communication. Among them, a LoRa tag implemented with commercial off-the-shelf components can send its sensing data to the receiver of 381 meters away. Currently, most of the studies are focusing on independent detailed techniques for various optimization targets. It is hard to see a comprehensive system design fully meeting the requirements of the target use cases. However, the standardization of those technologies is agile and quick, as the industries usually follow some de facto standards. It means that many products in the market will follow even a private standard once it shows competitiveness in some applications.

Regarding 3GPP activities on Ambient IoT, a passive radio is a device that harnesses energy from wireless signals sent on specific carriers and/or bandwidths and charges a simple circuitry that, once activated, it will emit or reflect a signal which encodes at least the identification (ID) of the passive radio. The typical system architecture around a passive radio includes an activator, the passive radio and a reader. The activator is a device that sends an activation signal targeted at waking up the passive radio. The passive radio can harness energy over a range of frequencies and listen for activation signals. Once such a signal is detected, the passive radio emits or reflects a signal which is specific to that radio ID. The reader is a device that listens and detects the passive radio signals. The reader may or may not be collocated with the activator.

There are different types of IoT devices. A Device A has no energy storage and no independent signal generation/amplification, i.e., backscattering transmission. The Device B has energy storage, and has no independent signal generation, i.e., backscattering transmission. Use of stored energy can include amplification for reflected signals. The Device C has energy storage and independent signal generation, i.e., active RF components for transmission.

The design targets for power consumptions for Device A is less than or equal to 10 µW. The design targets for power consumptions for Device C is less than or equal to 1 mW. The design targets for power consumptions for Device B is greater than Device A and less than Device C. The device complexity design target for Device A is that it is comparable to ultrahigh frequency (UHF) RFID. The device complexity design target for Device C is that the orders-of-magnitude is lower than NB-IoT. The device complexity design target for Device B is between Device A and Device C.

The Ambient IoT backscatter devices A and B are quite similar, but a device B may offer lower backscatter reflection loss compared to a device A using its stored energy reserve thus offering increased coverage range compared to device A. A device A has no energy storage and thus will need to charge on the activation signal to wake up and initiate ID/data modulated backscattering. A device B has energy storage which may be harvested up front any backscattering and as such this device type does not need to harvest energy from the activation signal while modulating the backscatter.

Therefore, there is a need to propose an Ambient IoT device design to obtain the pros of both devices A and B at the same time for dual frequency/band activation signal. The embodiments of the present disclosure provide a terminal device (such as an IoT device) that solves, among other potential problems, the problem of having to choose between either high coverage (device B) or low charging resource overhead (device A). Meanwhile, the terminal device can support BPSK backscatter with low complexity, cost, and a small size.

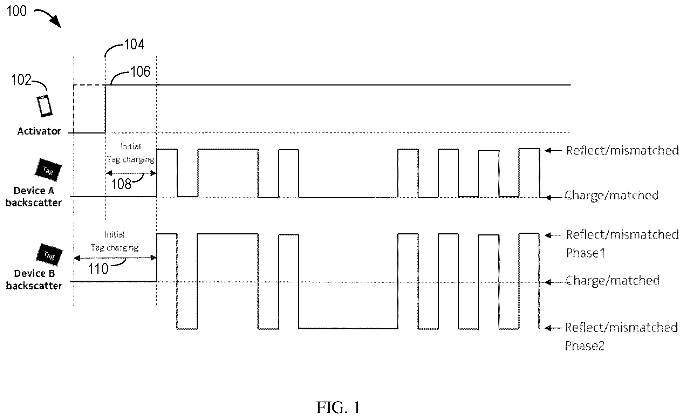

For illustrative purposes, principles and example embodiments of the present disclosure of a terminal device will be described below with reference to FIG. 1- FIG. 9. However, it is to be noted that these embodiments are given to enable the skilled in the art to understand inventive concepts of the present disclosure and implement the solution as proposed herein, and not intended to limit scope of the present application in any way.

Reference is made to FIG. 1, which illustrates an example ambient IoT (A-IoT) backscatter operation for device A and B related to some example embodiments of the present disclosure. As illustrated in FIG. 1, an activator 102, at the time point 104, transmits an activation signal 106. Device A has no energy storage and thus will need to charge on the activation signal to wake up and initiate ID/data modulated backscattering. To sustain the backscatter, the modulation will be OOK switching the antenna load between two states: matched state (denoted as X0) for energy absorbing charging and unmatched reflecting state. Since the device A is effectively only reflecting the activation signal half of the time the backscatter modulation factor, M, is represented by (1):

$$M = \left(\tfrac{1}{2} \cdot |X1 - X0|\right)^2 = 0.25 \qquad (1)$$

where X0=0 and X1=1. Thus the length of the initial charging time is the duration 108 as shown in FIG. 1.

As also shown in FIG. 1, a device B has energy storage which may be harvested up front and as such this device type does not need to harvest energy from the activation signal while modulating the backscatter. The device B consequently may reflect the activation all the time while performing BPSK or other phase modulation between two or more reflective states, for example, represented by (2):

$$M = \left(\tfrac{1}{2} \cdot |X1 - X0|\right)^2 = 1 \qquad (2)$$

where X0=-1 and X1=1. Thus the length of the initial charging time is the duration 110 as shown in FIG 1.

From the discussion with reference to FIG. 1, it can be seen that the pros for a device A may be that it does not require up front energy harvesting so can be accessed at any point in time when both activator and reader are within reach.

The cons may be that it has significantly lower coverage compared to a device B, and the OOK modulation has higher error rates than modulation the BPSK modulation.

The pros for a device B may be that it has significantly better coverage compared to a device A and detection of device B transmission has lower error rate than device A's. The cons may be that it requires up front energy harvesting to operate. The energy is from either non 3GPP controlled energy source which may be more or less reliable, or from network RF harvesting which may take additional resources.

Therefore, the present disclosure proposes an A-IoT device type A with a single resonance antenna. It can support BPSK backscatter with low complexity, cost, and a small size. In some example embodiments, it can toggle between OOK for single activation frequency and BPSK plus energy harvesting for dual activation frequency.

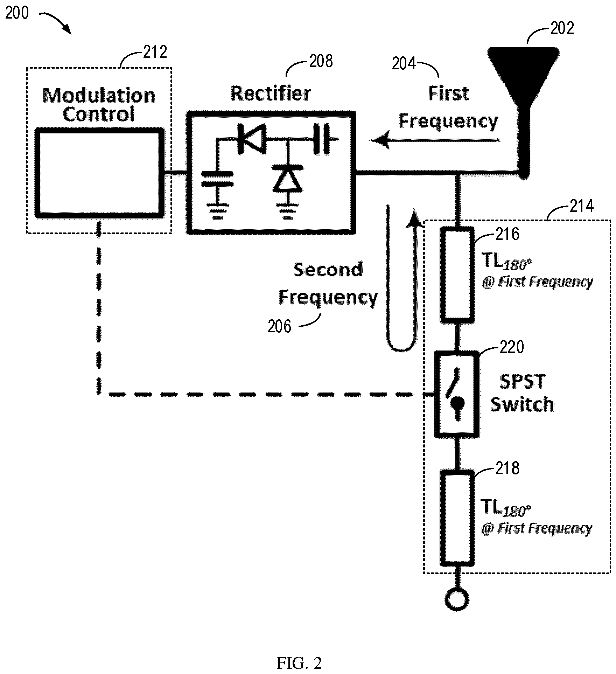

Reference is made to FIG. 2, which illustrates an example terminal device 200 in accordance with some example embodiments of the present disclosure. The terminal device 200 may be an A-IoT device type A with circuits for supporting static BPSK with a dual activation signal.

As shown in FIG. 2, the terminal device 200 comprises a single resonance antenna 202. An antenna feed of the single resonance antenna 202 is coupled to a rectifier 208 and to circuitry 214 (also referred to as first circuitry) in parallel. The rectifier 208 is coupled to a modulation control module 212 (also referred to as second circuitry). The rectifier 208 may supply the modulation control module 212 directly. An energy storage may be part of the rectifier 208 (such as the parallel capacitor included in the rectifier 208). It is to be understood that an energy storage may be an independent element as well. Therefore, rectifier and energy storage may be used interchangeably thereafter.

The circuitry 214 comprises a transmission line 216 (also referred to as a first transmission line). The transmission line 216 is coupled to a SPST switch 220 (also referred to as a second SPST switch). The SPST switch 220 is coupled to a transmission line 218 (also referred to as a second transmission line).

The circuitry 214 is configured for a BPSK modulation if a dual frequency signal is received via the single resonance antenna 202. The first frequency part 204 of the dual frequency signal matches the antenna resonance frequency and is used for charging an energy storage. The second frequency part 206 of the dual frequency signal is used for performing the BPSK modulation at a mismatched frequency of an antenna impedance.

The circuitry 212 is configured to control a state of the circuitry 214 for performing the BPSK modulation. If the SPST switch 220 is in an off-state, the first frequency part 204 will see an open stub with an electrical length of 180° (half a wavelength), which will result in a high impedance and thus the first frequency part 204 match is unaffected. If the SPST switch 220 is in an on-state, the first frequency part 204 will see an open stub with an electrical length of 360° (one wavelength), which still will result in a high impedance and the match of the first frequency part 204 is still unaffected.

In this way, the terminal device 200 can support BPSK backscatter with less changes to the A-IoT tag. This can ensure low complexity, low price, and small size. The energy storage can be constantly charged, while performing BPSK modulation at the second frequency part.

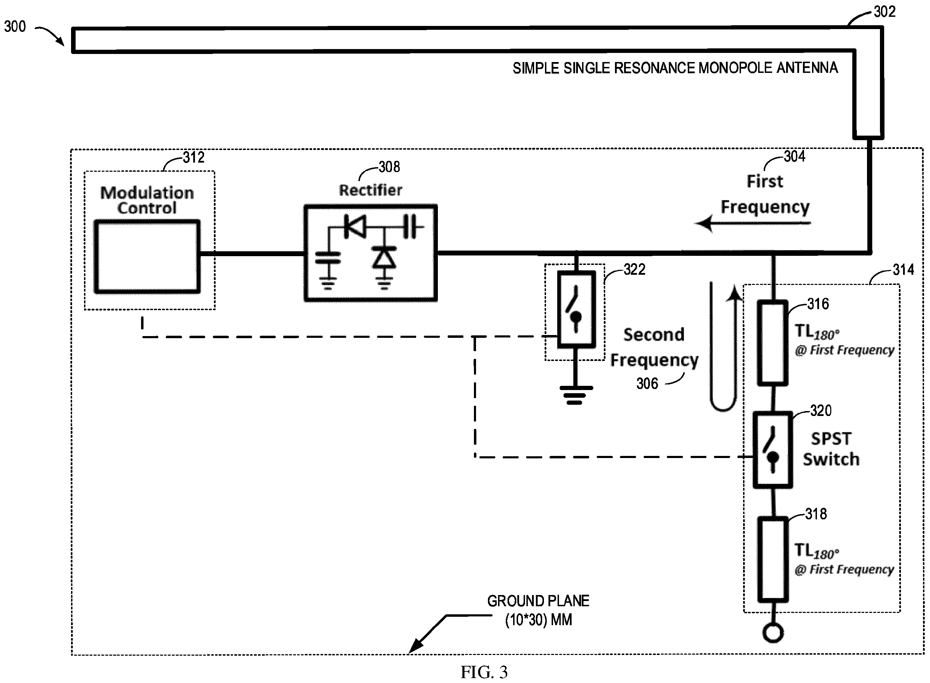

Reference is made to FIG. 3, which illustrates an example terminal device 300 in accordance with some example embodiments of the present disclosure. The terminal device 300 may be an A-IoT device type A with circuits for supporting BPSK for a dual activation signal or OOK for single frequency activation.

As shown in FIG. 3, the terminal device 300 may comprise a simple single resonance antenna 302. The simple single resonance antenna 302 may be a monopole antenna with an electrical small ground plane. An antenna feed of the simple single resonance antenna 302 may be coupled to a rectifier 308, to circuitry 314 and to circuitry 322 (also referred to as third circuitry) in parallel. The rectifier 308 may be coupled to a modulation control module 312. The circuitry 314 may comprise a transmission line 316. The transmission line 316 may be coupled to a SPST switch 320. The SPST switch 320 may be coupled to a transmission line 318. The functions of the circuitry 314 may be similar to the functions of the circuitry 214 in FIG. 2, and thus for the purpose of simplification, it will not be described again.

The circuitry 312 may be configured to control a state of the circuitry 322 for performing the OOK modulation. The antenna 202 may be matched to the first frequency part 304 of the dual activation signal. The circuitry 322 may comprise a SPST switch (also referred to as a first SPST switch 322). If the first SPST switch 322 is in an off-state, the circuitry 322 may be configured for performing the BPSK modulation at the second frequency part 306. The first frequency part 304 may constantly charge the energy storage in the rectifier 308. If the first SPST switch is in an on-state, and a single frequency signal is received via the antenna resonance frequency, the circuitry 322 may be configured for performing the OOK modulation for at the single frequency for the single frequency activation signal.

In some example embodiments, the modulation control module 312 may toggle the SPST switch 320 to obtain a BPSK modulated signal with 180° phase shift at the second frequency part 306 that is 1.5 times higher or 0.5 times lower that the first frequency part 304 used for charging, for example, $\pm f_{act}/2$, where $f_{act}$ is the activation frequency).

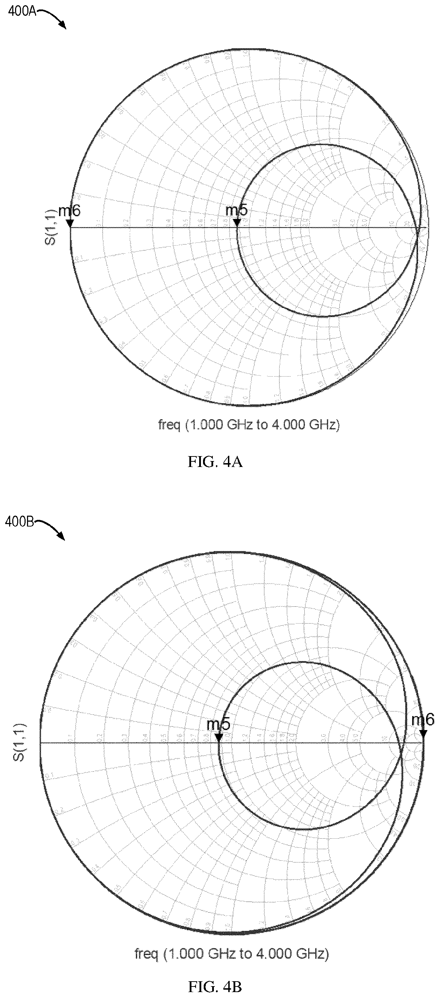

Reference is made to FIGS. 4A and 4B, which illustrate an example complex impedance of a single resonance A-IoT antenna resonating at a certain frequency in accordance with some example embodiments of the present disclosure. FIGS. 4A and 4B show a complex impedance of a single resonance A-IoT antenna resonating at 2133 MHz, where m5 is for the matched first activator frequency and m6 is for the unmatched second activator frequency at 3200 MHz.

As shown in FIG. 4A, the first stage of the terminal device 300 is with the second SPST switch 320 in an off-state (switch open) where the first frequency part 304 may see an open stub with an electrical length of 180° (half a wavelength), which will result in a high impedance and thus the first frequency part 304 match is unaffected at this first stage (as shown at m5). The second frequency part may see an open stub with an electrical length of 270° (3 times 90°), which is the equivalent of a short connection (as shown at m6).

As shown in FIG. 4B, the second stage of the terminal device 300 is with the second SPST switch 320 in in an on-state (switch closed) where the first frequency part 304 may see an open stub with an electrical length of 360° (one wavelength), which still will result in a high impedance and the match of the first frequency part 304 is still unaffected at this second stage. The second frequency part 306 may see an open stub with an electrical length of 540° (6 times 90°), which is the equivalent of an open connection (as shown at m6).

Therefore, the resonance frequency (2133 MHz) of the antenna is unaffected by the toggling of the SPST switch 320 for BPSK modulation, which can ensure that the A-IoT tag constantly charges on the first frequency part. It is also evident that toggling the BPSK SPST switch can change the state of the mis-matched second activation frequency (3200 MHz) between an open and closed reflection, which is equivalent to a phase shift of 180°. As such, since the two shunt BPSK toggling stages are always seen as a high impedance for the first frequency part, it will have no or very low effect on the charging efficiency of the A-IoT tag.

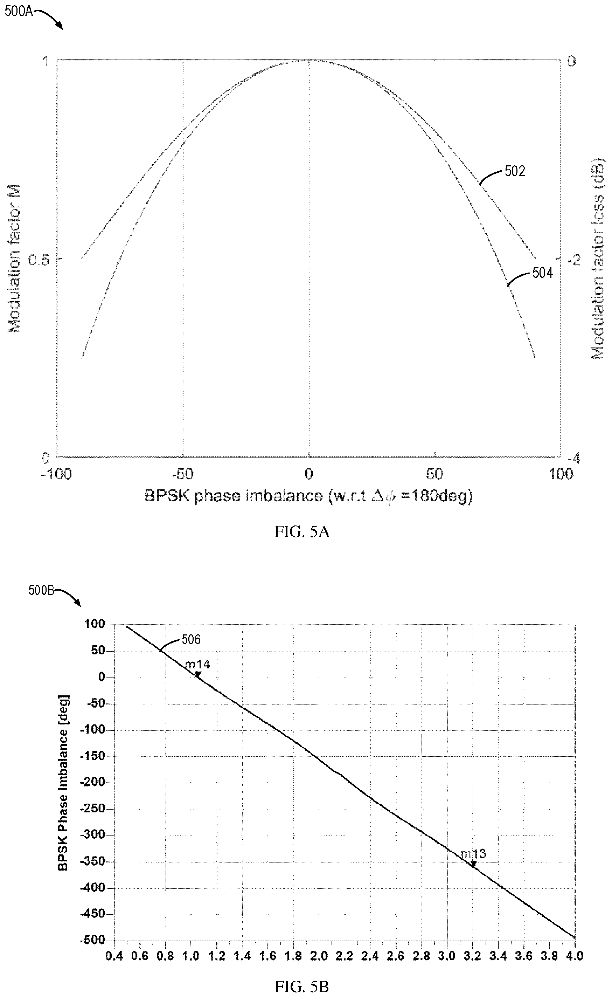

Reference is made to FIGS. 5A and 5B, which illustrate an example BPSK phase imbalance in accordance with some example embodiments of the present disclosure. FIG. 5A shows modulation factor and modulation loss due to BPSK phase imbalance. FIG. 5B shows BPSK phase imbalance (m13 = 3200 MHz) and (m14 = 1066 MHz).

If the single frequency signal is received via the antenna resonance frequency, the OOK modulation on the single frequency can be obtained by toggling the first SPST switch 322 between off-state (where the antenna 302 is matched and energy harvesting is possible) and the on-state (where the antenna 302 is mis-matched and in reflective mode, and the energy harvesting is not possible). The first SPST switch 322 may have to be in off-state when applying BPSK modulation.

The design of the terminal device 300 only has a single SPST switch in the reflecting modes for both of the modulation modes (BPSK or OOK), which can minimize the loss and increase the terminal device 300 (such as an A-IoT tag) to reader's coverage. On top of this coverage improvement there is additionally the reflection gain coming from BPSK versus OOK modulation.

For example, as shown in FIG. 5A, The BPSK modulation phase delta will be at 180° for a second frequency 1.5 times higher (3200 MHz) or 0.5 times lower (1066 MHz) than the first activation frequency as explained above. However, phase modulation will also occur on adjacent frequencies of those, but not with exactly 180°, as illustrated by the BPSK phase imbalance plot in FIGS. 5A and 5B for the lower frequency range (0.5 times fact at m14) and the higher frequency range (1.5 times fact at m13).

The sensitivity of the BPSK modulation as a function of the phase imbalance is shown in Figure 5a, where it's evident that a loss of up to 3 dB will occur for phase imbalances up to 90°. This is equivalent to a valid/useful frequency range of approximately 2.7 GHz to 3.7 GHz for the high frequency (1.5 times fact), or an effective relative frequency range of up to 30 % for the high frequency at 3200 MHz, depending on the potential accepted modulation loss. The valid/useful frequency range for the low frequency range (0.5 times fact) is from 536 MHz to 1616 MHz, close to an effective relative bandwidth of 100%.

Phase modulation with 90° phase shifts will reduce the BPPK modulation factor from M = 1 to M = 0.5 and introduce a modulation loss of 3 dB. However, that is still 3 dB better than OOK than has a modulation factor of only 0.25 and a modulation loss of 6 dB compared to 180° BPSK.

In summary, the proposed dual activation signal A-IoT device implementation will offer reflection gains of 3dB to 6dB compared to basic single frequency activation OOK modulation within a wide range of selectable deltas between first and second frequency.

By implementing the example embodiments of FIG. 3, it can enable an A-IoT device type A to support BPSK backscatter with minimal changes to the A-IoT tag. This will ensure low complexity, low price, and small size. Further, it can be possible to switch between OOK and BPSK with low added complexity. Using this switched open stub (SOS) design to change the length of a stub for an un-matched frequency to enable BPSK backscatter for an A-IoT device type A can avoid affecting the single matched resonance of the antenna used for energy harvesting. It can also allow switching between OOK and BPSK for an A-IoT tag device type A implemented with a single resonance antenna.

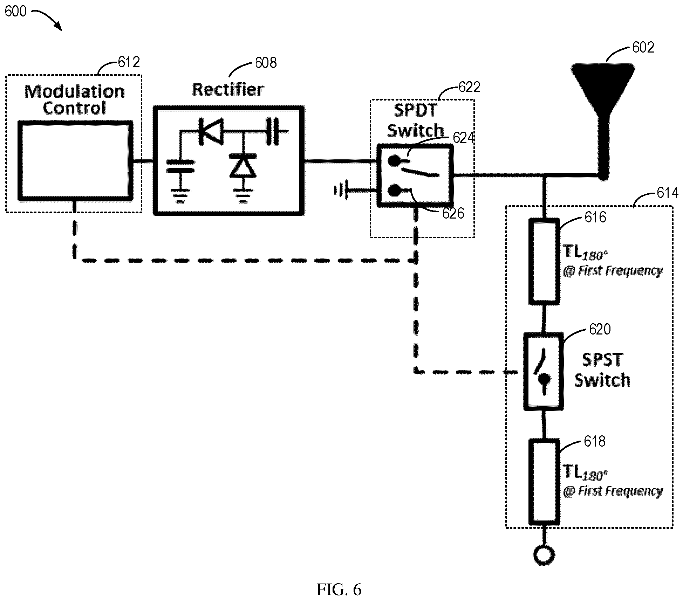

Reference is made to FIG 6, which illustrates an example terminal device 600 in accordance with some example embodiments of the present disclosure. For the terminal device 600, BPSK or OOK modulation can be toggled for dual and single frequency activation signal(s), respectively. The terminal device 600 may be implemented with a combination of a SPST switch and a SPDT switch design.

As shown in FIG. 6, the antenna 602 may correspond to the antenna 302 in FIG. 3. The circuitry 614 may correspond to the circuitry 314 in FIG. 3. The rectifier 608 may correspond to the rectifier 308 in FIG. 3. The modulation control module 612 may correspond to the modulation control module 312 in FIG. 3. The functions of those elements may be similar to the functions of the respective elements in FIG. 3, and thus for the purpose of simplification, it will not be described again.

The terminal device 600 may comprise a SPDT switch 622 (also referred to as a first SPDT switch). The SPDT switch 622 may be coupled to the antenna 602 and the circuitry 614 in series. The terminal device 600 may alter between OOK and BPSK depending on the number of activation signals in frequency. A single frequency activation signal may cause the terminal device 600 toggle the SPDT switch 622 in the signal path to enable OOK modulation on the single transmitted activation signal (switched to 626). The terminal device 600 may toggle the SPST switch 620 located in between the 180° stubs for BPSK modulation for dual frequency activation signals, while configuring the SPDT switch 622 (switched to 624) to connect to the rectifier 608 for constantly charging.

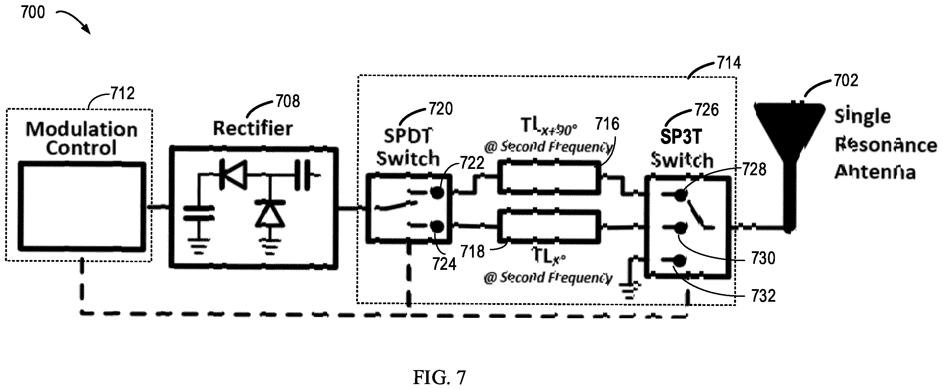

Reference is made to FIG. 7, which illustrates an example terminal device 700 in accordance with some example embodiments of the present disclosure. For the terminal device 700, the BPSK or OOK modulation can be toggled for dual and single frequency activation signal(s), respectively. The terminal device 700 may be implemented with a combination of a SP3T switch and a SPDT switch design.

As shown in FIG. 7, the antenna 702 may correspond to the antenna 202 in FIG. 2. The circuitry 714 may correspond to the circuitry 214 in FIG. 2. The rectifier 708 may correspond to the rectifier 208 in FIG. 2. The modulation control module 712 may correspond to the modulation control module 212 in FIG. 2. The functions of those elements may be similar to the functions of the respective elements in FIG. 2, and thus for the purpose of simplification, it will not be described again.

The circuitry 714 may comprise a SP3T switch 726 coupled to the antenna 702, a transmission line 716 and a transmission line 718. The transmission lines 716 and 718 may be of different electrical length and may be coupled to the SP3T switch 726 and to a SPDT switch 720 (also referred to as a fourth SPDT switch). The SP3T switch 726 and the SPDT switch 720 may be coupled to the modulation control module 712.

A single frequency activation signal may cause the terminal device 700 toggle the SP3T switch 726 between shorted-state (bottom, 732) and direct-state (middle, 730 or top, 728) in the signal path to enable OOK modulation, while the SPDT switch 720 is conned to the direct-state (bottom, 724 or the top 772, depending on the configuration of switch 726) for the single transmitted activation signal. The terminal device 700 may toggle the SP3T switch 726 between 180° reflected delay-state (top, 728) and a reflected direct-state (middle, 730) in the signal path to enable BPSK modulation for a second frequency, while the SPDT switch 720 is switched in parallel for a dual frequency activation signal. The second frequency signal will be reflected at the rectifier and pass through the transmission line 716 twice, resulting a total relative phase shift of 180°, when switch 720 and 726 are configured for the delay-state and a relative 0° phase shift when switch 720 and 726 are configured for the direct-state. The first frequency will be match for both BPSK switch settings, with a different phase delay, which is unimportant as it's used for energy harvesting.

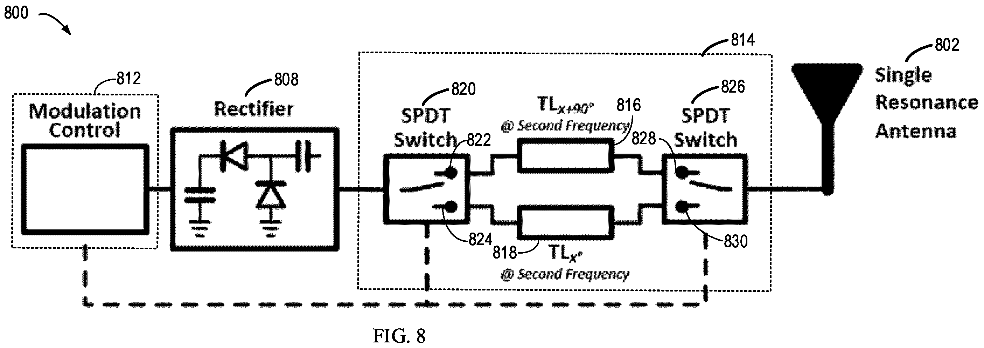

Reference is made to FIG 8, which illustrates an example terminal device 800 in accordance with some example embodiments of the present disclosure. For the terminal device 800, it can support static BPSK with a dual activation signal. The terminal device 800 may be implemented with a dual SPDT switch design.

As shown in FIG. 8, the antenna 802 may correspond to the antenna 202 in FIG. 2. The circuitry 814 may correspond to the circuitry 214 in FIG. 2. The rectifier 808 may correspond to the rectifier 208 in FIG. 2. The modulation control module 812 may correspond to the modulation control module 212 in FIG. 2. The functions of those elements may be similar to the functions of the respective elements in FIG. 2, and thus for the purpose of simplification, it will not be described again.

The circuitry 814 may comprise a SPDT switch 826 (also referred to a second SPDT switch) coupled to the antenna 802, a transmission line 816 and a transmission line 818. The transmission lines 816 and 818 may be of different electrical length and may be coupled to the SPDT switch 826 and to a SPDT switch 820 (also referred to a third SPDT switch). The SPDT switch 826 and the SPDT switch 820 may be coupled to the modulation control module 812.

The SPDT switches 820 and 826 may be switched in parallel to change the phase for both the matched and un-matched activation frequencies. For example, the SPDT switch 826 may be switched to 828 while the SPDT switch 820 is switched to 822 for a 180° reflected delay-state. As another example, the SPDT switch 826 may be switched to 830 while the SPDT switch 820 is switched to 824 for a reflected direct-state. The second frequency signal will be reflected at the rectifier and pass through the transmission line 816 twice, resulting a total relative phase shift of 180°, when switch 820 and 826 are configured for the delay-state and a relative 0° phase shift when switch 820 and 826 are configured for the direct-state. The first frequency will be match for both BPSK switch settings, with a different phase delay, which is unimportant as it's used for energy harvesting.

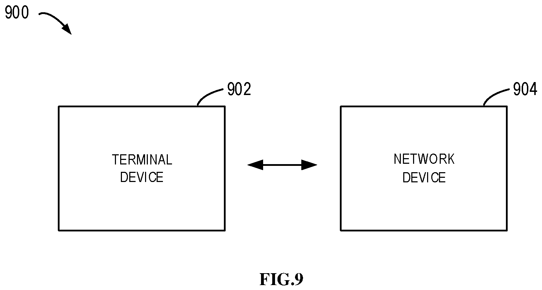

Reference is made to FIG. 9, which illustrates an example communication system 900 comprising the terminal device in accordance with some example embodiments of the present disclosure. In some example embodiments, the communication system 900 may comprise at least one terminal device 902 and at least one network device 904. The terminal device 902 can communicate with the network device 904. It is to be understood that this is only an example without any limitations.

The communication system 900 may comprise any other devices, and the number of the devices are not limited. The communication system 900 may comprise the at least one terminal device 902 according to any embodiments discussed with FIGS. 2-3 and 6-8. For example, the terminal device may be the terminal device 200 in FIG. 2 or the terminal device 300 in FIG. 3. For brevity, the various embodiments of the terminal device will not be described again.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present subject matter may comprise the following clauses.

Clause 1. A terminal device comprising: first circuitry coupled to an antenna and configured for a binary phase shift keying (BPSK) modulation based on a dual frequency signal received via the antenna, wherein a first frequency part of the dual frequency signal matches the antenna resonance frequency and is used for charging an energy storage of the terminal device, and a second frequency part of the dual frequency signal is used for performing the BPSK modulation at a mismatched frequency of an antenna impedance; and second circuitry coupled to the first circuitry and configured to control a state of the first circuitry for performing the BPSK modulation.

Clause 2. The terminal device of clause 1, further comprising: third circuitry coupled to the antenna and configured for an on-off-key (OOK) modulation based on a single frequency signal received via the antenna resonance frequency, wherein the second circuitry is coupled to the third circuitry and configured to control a state of the third circuitry for performing the OOK modulation.

Clause 3. The terminal device of clause 2, wherein the first circuitry and the third circuitry are coupled in parallel to an antenna feed.

Clause 4. The terminal device of clause 2 or 3, wherein the third circuitry comprises a first single pole single throw (SPST) switch connected to ground.

Clause 5. The terminal device of clause 4, wherein: in the event that the single frequency signal is received via the antenna and the first SPST switch is in an on-state, the antenna impedance at the single frequency is to be mismatched and the single frequency is reflected back; in the event that the single frequency signal is received via the antenna and the first SPST switch is in an off-state, the antenna impedance at the single frequency is to be matched and the single frequency signal is to charge the energy storage; and wherein a toggling of the first SPST switch is to result in the OOK modulation and a periodically energy harvesting.

Clause 6. The terminal device of clause 4 or 5, wherein in the event that the dual frequency signal is received via the antenna, the first SPST switch is configured in an off-state.

Clause 7. The terminal device of any of clauses 1-6, wherein the first circuitry comprises a first transmission line coupled to the antenna, a second SPST switch coupled to the first transmission line, and a second transmission line coupled to the second SPST switch, and wherein the second SPST switch is coupled to the second and the third circuitry.

Clause 8. The terminal device of any of clauses 4-7, wherein in the event that the first SPST switch is in the off-state, the first circuitry acts as a high impedance for the first frequency part such that the first frequency part is to charge the energy storage, and the first circuitry acts as a low impedance for the second frequency part such that the second frequency is reflected back at an open end of the first or second transmission line of the first circuit.

Clause 9. The terminal device of clause 7 or 8, wherein a phase shift of the second frequency part varies based on an electrical length of an open stub associated with the second SPST switch in the on-state or the off-state, wherein the second SPST switch is configured to enable the BPSK modulation.

Clause 10. The terminal device of any of clauses 1-9, wherein a phase change of the BPSK modulation is substantially 180 degrees for the second frequency part, wherein the second frequency part is substantially 1.5 times higher or substantially 0.5 times lower than the first frequency part.

Clause 11. The terminal device of clause 2, wherein the third circuitry comprises a first single pole double throw (SPDT) switch.

Clause 12. The terminal device of clause 11, wherein by toggling the SPDT switch: the OOK modulation is enabled for both the single frequency signal and the dual frequency signal; and either of the OOK modulation and the BPSK modulation is enabled for the dual frequency signal.

Clause 13. The terminal device of clause 1, wherein the first circuitry comprises a second SPDT switch coupled to the antenna, two transmission lines of different electrical length coupled to the second SPDT switch and to a third SPDT switch, and wherein the second SPDT switch and third SPDT switch are coupled to the second circuitry.

Clause 14. The terminal device of clause 11, wherein the second SPDT switch and third SPDT switch are switched in parallel to change phases for both the first frequency part and the second frequency part.

Clause 15. The terminal device of clause 1, wherein the first circuitry comprises a single pole triple throw (SP3T) switch coupled to the antenna, two transmission lines of different electrical length coupled to the SP3T switch and to a fourth SPDT switch, and wherein the SP3T switch and the fourth SPDT switch are coupled to the second circuitry.

Clause 16. The terminal device of clause 15, wherein in the event that a single frequency signal is received via the antenna, the SP3T switch is configured in a shorted-state, and the single frequency signal does not match the antenna and is reflected back.

Clause 17. The terminal device of clause 15, wherein in the event that a single frequency signal is received via the antenna, the SP3T switch is configured in a direct-state together with fourth SPDT, and the single frequency signal matches the antenna and charges the energy storage; and wherein a toggling of the SP3T switch together with the fourth SPDT is to result in the OOK modulation and a periodically energy harvesting.

Clause 18. The terminal device of clause 18, wherein in the event that the dual frequency signal is received via the antenna, the SP3T switch is configured in a 180-degree reflected delay-state, and the fourth SPDT switch is configured in parallel with the SP3T switch, and the second frequency part is reflected back using the BPSK modulation, and wherein the second frequency part is delayed by 180 degrees in the 180-degree reflected delay-state.

Clause 19. The terminal device of any of clauses 1-18, wherein the antenna is a single resonance antenna.

Clause 20. A communication system comprising: at least one terminal device of any of clauses 1-19; and at least one network device in communication with the at least one terminal device.

**Claims**

1. A terminal device (200) comprising:

   first circuitry (214) coupled to an antenna (202) and configured for a binary phase shift keying (BPSK) modulation based on a dual frequency signal received via the antenna, wherein a first frequency part (204) of the dual frequency signal matches the antenna resonance frequency and is used for charging an energy storage of the terminal device, and a second frequency part (206) of the dual frequency signal is used for performing the BPSK modulation at a mismatched frequency of an antenna impedance; and

   second circuitry (212) coupled to the first circuitry and configured to control a state of the first circuitry for performing the BPSK modulation.

2. The terminal device of claim 1, further comprising:
   third circuitry (322) coupled to the antenna and configured for an on-off-key (OOK) modulation based on a single frequency signal received via the antenna resonance frequency, wherein the second circuitry is coupled to the third circuitry and configured to control a state of the third circuitry for performing the OOK modulation.

3. The terminal device of claim 2, wherein the first circuitry and the third circuitry are coupled in parallel to an antenna feed.

4. The terminal device of claim 2 or 3, wherein the third circuitry comprises a first single pole single throw (SPST) switch connected to ground or a first single pole double throw (SPDT) switch (622).

5. The terminal device of claim 4, wherein:

   in the event that the single frequency signal is received via the antenna and the first SPST switch is in an on-state, the antenna impedance at the single frequency is to be mismatched and the single frequency is reflected back; in the event that the single frequency signal is received via the antenna and the first SPST switch is in an off-state, the antenna impedance at the single frequency is to be matched and the single frequency signal is to charge the energy storage; and wherein a toggling of the first SPST switch is to result in the OOK modulation and a periodically energy harvesting.

6. The terminal device of claim 4 or 5, wherein in the event that the dual frequency signal is received via the antenna, the first SPST switch is configured in an off-state.

7. The terminal device of any of claims 1-6, wherein the first circuitry comprises a first transmission line (216) coupled to the antenna, a second SPST switch (220) coupled to the first transmission line, and a second transmission line (218) coupled to the second SPST switch, and wherein the second SPST switch is coupled to the second and the third circuitry.

8. The terminal device of any of claims 4-7, wherein in the event that the first SPST switch is in the off-state, the first circuitry acts as a high impedance for the first frequency part such that the first frequency part is to charge the energy storage, and the first circuitry acts as a low impedance for the second frequency part such that the second frequency is reflected back at an open end of the first or second transmission line of the first circuit.

9. The terminal device of claim 7 or 8, wherein a phase shift of the second frequency part varies based on an electrical length of an open stub associated with the second SPST switch in the on-state or the off-state, wherein the second SPST switch is configured to enable the BPSK modulation.

10. The terminal device of any of claims 1-9, wherein a phase change of the BPSK modulation is substantially 180 degrees for the second frequency part, wherein the second frequency part is substantially 1.5 times higher or substantially 0.5 times lower than the first frequency part.

11. The terminal device of claim 4, wherein by toggling the SPDT switch:

    the OOK modulation is enabled for both the single frequency signal and the dual frequency signal; and
    either of the OOK modulation and the BPSK modulation is enabled for the dual frequency signal.

12. The terminal device of claim 1, wherein the first circuitry comprises a second SPDT switch (826) coupled to the antenna, two transmission lines (816, 818) of different electrical length coupled to the second SPDT switch and to a third SPDT switch (820), and wherein the second SPDT switch and third SPDT switch are coupled to the second circuitry.

13. The terminal device of claim 12, wherein the second SPDT switch and third SPDT switch are switched in parallel to change phases for both the first frequency part and the second frequency part.

14. The terminal device of claim 1, wherein the first circuitry comprises a single pole triple throw (SP3T) switch (726) coupled to the antenna, two transmission lines (716, 718) of different electrical length coupled to the SP3T switch and to a fourth SPDT switch (720), and wherein the SP3T switch and the fourth SPDT switch are coupled to the second circuitry;

    wherein in the event that a single frequency signal is received via the antenna, the SP3T switch is configured in a shorted-state, and the single frequency signal does not match the antenna and is reflected back;
    or
    in the event that a single frequency signal is received via the antenna, the SP3T switch is configured in a direct-state together with fourth SPDT, and the single frequency signal matches the antenna and charges the energy storage; and wherein a toggling of the SP3T switch together with the fourth SPDT is to result in the OOK modulation and a periodically energy harvesting;
    or
    in the event that the dual frequency signal is received via the antenna, the SP3T switch is configured in a 180-degree reflected delay-state, and the fourth SPDT switch is configured in parallel with the SP3T switch, and the second frequency part is reflected back using the BPSK modulation, and wherein the second frequency part is delayed by 180 degrees in the 180-degree reflected delay-state.

15. A communication system (900) comprising:

    at least one terminal device (902) of any of claims 1-14; and
    at least one network device (904) in communication with the at least one terminal device.

FIG. 1

FIG. 2

FIG. 3

EP 4 525 317 A2

400A

freq (1.000 GHz to 4.000 GHz)

FIG. 4A

400B

freq (1.000 GHz to 4.000 GHz)

FIG. 4B

500A

FIG. 5A

500B

FIG. 5B

600

612

**Modulation Control**

608

**Rectifier**

622

**SPDT Switch** 624

626

602

614

616

$TL_{180°}$
*@ First Frequency*

620

**SPST Switch**

618

$TL_{180°}$
*@ First Frequency*

FIG. 6

FIG. 7

EP 4 525 317 A2

FIG. 8

900

902

904

TERMINAL
DEVICE

NETWORK
DEVICE

**FIG.9**